# EUROPEAN PATENT SPECIFICATION

(11) **EP 2 883 405 B1**
(45) Date of publication and mention of the grant of the patent: **06.07.2016**
(21) Application number: 13774826.5
(22) Date of filing: 09.08.2013
(51) Int. Cl.: H04W 72/08, H04W 72/04, H04L 5/00

(54) **APPARATUS AND METHODS FOR INTERFERENCE MITIGATION**
VORRICHTUNG UND VERFAHREN ZUR INTERFERENZUNTERDRÜCKUNG
APPAREIL ET PROCÉDÉS POUR UNE ACCUMULATION DE BROUILLAGE

(30) Priority: 09.08.2012 GB 201214257
(43) Date of publication of application: 17.06.2015
(73) Proprietor: Broadcom Corporation, Irvine, CA 92617 (US)
(72) Inventor: KAUKOVUORI, Jouni, FI-01690 Vantaa (FI); IMMONEN, Antti, FI-00210 Helsinki (FI); CALLENDER, Christopher, Cleish Kinross Kinross-shire KY13 0LW (GB)
(74) Representative: Bosch Jehle Patentanwaltsgesellschaft mbH
(86) International application number: PCT/IB2013/056536
(87) International publication number: WO 2014/024174

(56) References cited:
- US-A1- 2012 069 766
- US-A1- 2012 182 896
- "3rd Generation Partnership Project; Technical Specification Group Radio Access Networks; Evolved Universal Terrestrial Radio Access (E-UTRA); Study on signalling and procedure for interference avoidance for in-device coexistence; (Release 10)", 3GPP STANDARD; 3GPP TR 36.816, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. v1.3.1, 10 June 2011 (2011-06-10), pages 1-40, XP050692495, [retrieved on 2011-06-10]

## Description

### Technical Field

The present disclosure relates to interference mitigation. In particular, but not exclusively, the present disclosure relates to methods, apparatus, computer software and computer program products for mitigating interference in wireless communications of a user equipment comprising a plurality of radio transceivers.

### Background

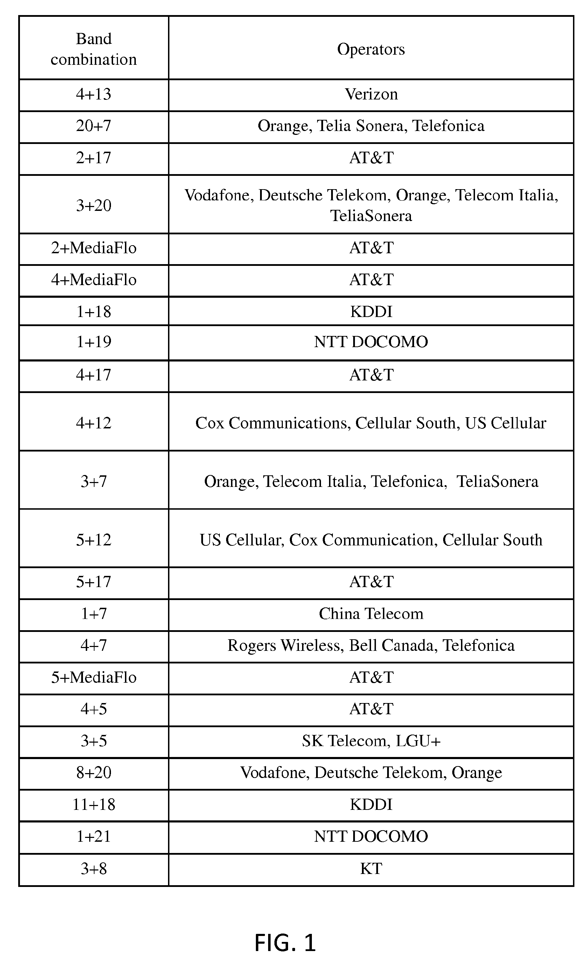

At present, in 3GPP TS25.101, DB-DC-HSDPA or dual-band 4C-HSDPA configurations are specified for band combinations I+VIII, II+IV, I+V, I+XI, and II+V. In addition, approximately 20 inter-band combinations are accepted as 3GPP working group RAN4 work items with new combinations being introduced from time to time. The table in Figure 1 summarises the current situation with inter-band CA cases according to active 3GPP work items for working group RAN4. Operator names indicate the operator(s) who are likely to use each combination, although it should be understood that this will not form part of any inter-band CA specifications.

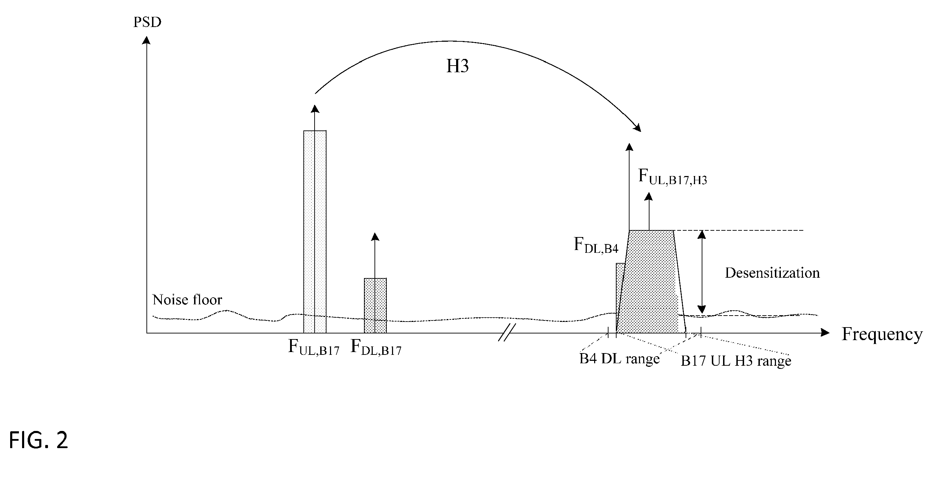

Inter-band CA or dual-carrier HSDPA with only one active UL can produce harmonic intermodulation distortion at another DL. For example, as illustrated in Figure 2, in a CA case of B17+B4 (i.e. 'a carrier aggregation of band 17 with band 4'), the 3rd order harmonic component H3 of the B17 transmitter overlaps with the B4 DL band, thus desensitizing the receiver.

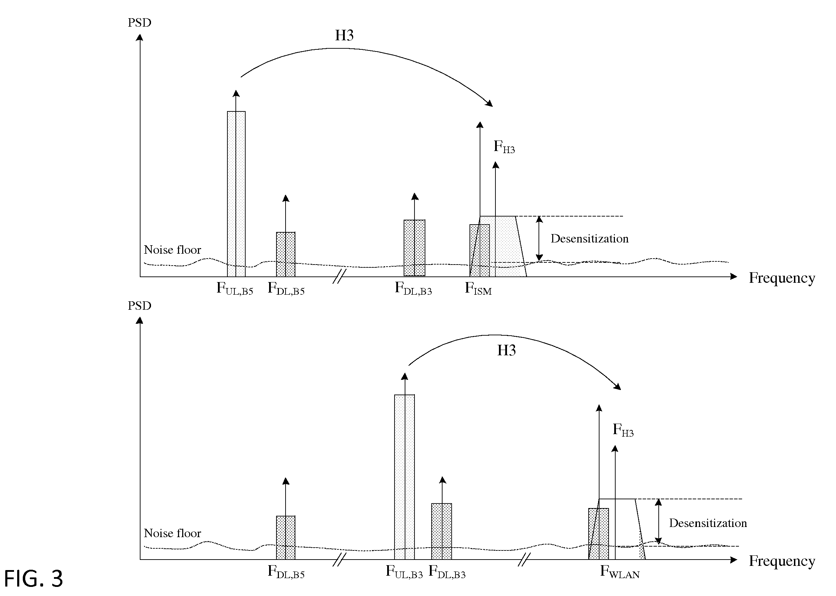

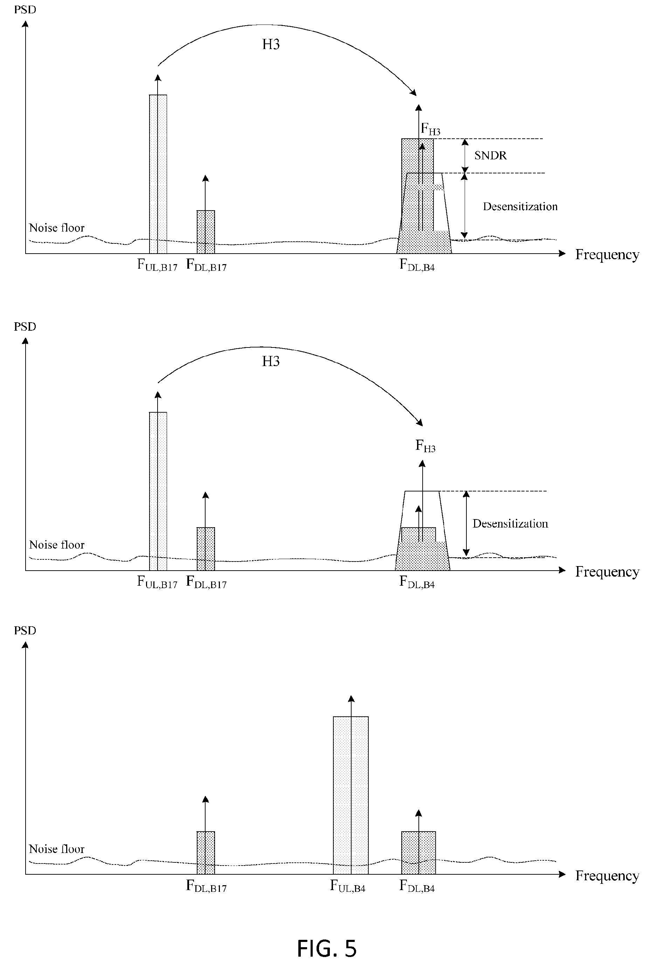

Furthermore, in order to allow users to access various networks and services ubiquitously, an increasing number of UEs are equipped with multiple radio transceivers. For example, a UE may be equipped with LTE, Wi-Fi™, Bluetooth™ transceivers and GNSS receivers. Figure 3 shows such inter-RAT combinations where H3 results are produced in (or 'on top of) a non 3GPP band, such as used in a WLAN system. For example, in a CA case of B5+B3, the active cellular UL on Band 5 or Band 3 can cause desense on 2.4-GHz ISM, as illustrated in the upper part of Figure 3, or 5-GHz WLAN receivers, as illustrated in the lower part of Figure 3, respectively. One resulting challenge lies in trying to avoid coexistence interference between such collocated radio transceivers.

Due to the extreme proximity of multiple radio transceivers within the same UE, the transmit power of one transmitter may be much higher than the received power level of another receiver. By means of filter technologies and sufficient frequency separation, the transmit signal may not result in significant interference. However, for some coexistence scenarios, for example different radio technologies within the same UE operating on adjacent frequencies, current state-of-the-art filter technology might not provide sufficient rejection. Therefore, solving the interference problem by single generic RF design may not always be possible and alternative methods need to be considered.

Although there might be a single active cellular UL in CA, there can still be another active UL within a UE when connectivity radio is being operated simultaneously. Combining two carriers on different frequencies produces intermodulation distortion due to nonlinearities in active and passive components. For instance, 2nd order intermodulation components are produced at frequencies given by FIM2=FUL_high±FUL_low and 3rd order intermodulation component are produced at frequencies given by FIMD3=2*FUL1±FUL2, and so on.

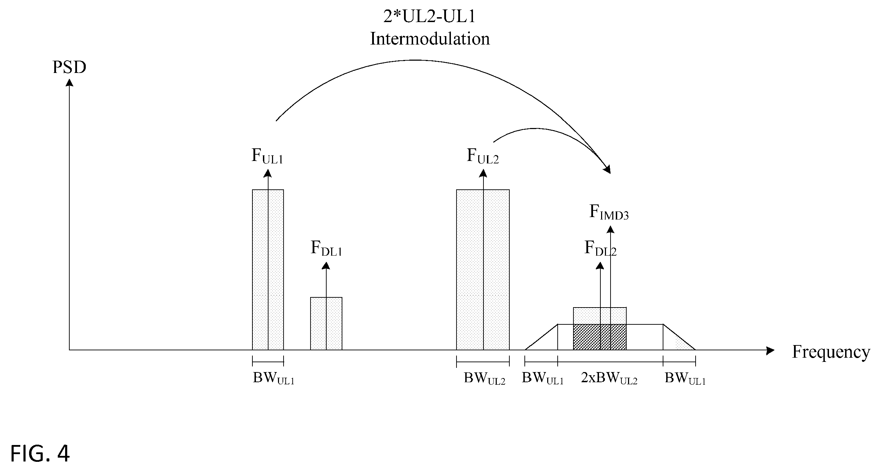

A simplified figure illustrating 3rd order intermodulation generation is shown in Figure 4. The two ULs have different BWs to illustrate the effect of the resulting intermodulation; the tone closer to the IMD3 frequency has twice the effect on the resulting IMD3 BW. In addition, a similar effect applies to the power. For example, when 2.4-GHz ISM radio is active with B7 UL, the DL of B7 suffers from desense caused by IMD3. The desense is merely a challenge for the main receiver since a diversity receiver does not have its own active transmitter at the same antenna port (although part of the active TX can still leak via finite antenna isolation).

In intermodulation problem cases, filtering can be used only to a certain extent because the power level of intermodulation components is dependent on the power level of transmitted powers, FE components linearity, antenna isolation, and k-factor. None of the aforementioned factors can be affected by filtering (although in theory, one exception to this might be antenna isolation). If an intermodulation component is produced just on top of the receiver, filtering will not provide any improvement. If an intermodulation component is produced partially on top of the receiver, then filtering can offer some improvement.

The interference problem could be mitigated by using a large amount of A-MPR. In single band LTE (3GPP Rel8/9/10) the maximum output power may be restricted by NS values. NS gives a certain amount of A-MPR (≥0dB), which is an amount of relaxation in relation to maximum allowed output power. It should be noted that A-MPR is a band-specific value in current 3GPP specifications.

In single band LTE operation, NS band-specific NS values are defined in such a way that the operation meets requirements. Inter-band CA is an evolutionary step from single band operation. Also, Nokia™ has proposed NS signalling for CA. However, signalling NS values for the PCell does not provide an optimum solution for many potential cases and cannot solve inter-RAT cases.

In IDC, autonomous denial is currently under discussions in 3GPP RAN2. There is an agreement that autonomous denial can be used in cases where other solutions (DRX reception etc.) do not work. So far, only single-carrier LTE has been considered. In the IDC area, it has been proposed to implement signalling such that if a certain cellular frequency causes IDC problems, it is signalled to the network and then the problematic frequency is most probably deactivated.

United States patent application no. US-A-2012/182896 describes an interference measurement method and a user equipment supporting the method. The method enables the user equipment having multiple heterogeneous communication modules for LTE, WiFi, Bluetooth and GPS to perform interference measurement so as to avoid coexistence interference. The user equipment may perform effective communication by identifying non-preferred frequency bands and avoiding coexistence interference caused by the heterogeneous communication modules.

There is therefore a need to improve UE overall performance across challenging scenarios, including measures to mitigate interference in wireless communications involving user equipment.

### Summary

In accordance with first embodiments, there is provided a method of mitigating interference in wireless communications of a user equipment comprising a plurality of radio transceivers, the method comprising, at the user equipment:
determining that wireless communication using a given combination of uplink and/or downlink carrier bands associated with the plurality of radio transceivers causes an interference scenario; and
in response to the determination, transmitting, into a radio network, an indication of at least one preferred carrier band for at least one of the plurality of radio transceivers, characterised in that:
   the indication comprises an indication of at least one preferred uplink carrier band for at least one of said plurality of radio transceivers,
   the plurality comprises at least one uplink transmitter and at least two downlink receivers, and
   the indication comprises an indication of at least one preferred uplink carrier band for said at least one uplink transmitter for use during downlink carrier aggregation via said at least two downlink receivers.

In accordance with second embodiments, there is provided apparatus for use in mitigating interference in wireless communications of a user equipment comprising a plurality of radio transceivers, the apparatus being adapted to, at the user equipment:
determine that wireless communication using a given combination of uplink and/or downlink carrier bands associated with the plurality of radio transceivers causes an interference scenario; and
in response to the determination, transmit, into a radio network, an indication of at least one preferred carrier band for at least one of the plurality of radio transceivers, characterised in that:
   the indication comprises an indication of at least one preferred uplink carrier band for at least one of said plurality of radio transceivers,
   the plurality comprises at least one uplink transmitter and at least two downlink receivers, and
   the indication comprises an indication of at least one preferred uplink carrier band for said at least one uplink transmitter for use during downlink carrier aggregation via said at least two downlink receivers.

In accordance with third embodiments, there is provided a method of mitigating interference in wireless communications of a user equipment comprising a plurality of radio transceivers, the method comprising, at a network node:
receiving, from the user equipment via a radio network, an indication of at least one preferred carrier band for at least one of the plurality of radio transceivers, the indication having been received in response to a determination by the user equipment that wireless communication using a given combination of uplink and/or downlink carrier bands associated with the plurality of radio transceivers causes an interference scenario, characterised in that:
   the indication comprises an indication of at least one preferred uplink carrier band for at least one of said plurality of radio transceivers,
   the plurality comprises at least one uplink transmitter and at least two downlink receivers, and
   the indication comprises an indication of at least one preferred uplink carrier band for said at least one uplink transmitter for use during downlink carrier aggregation via said at least two downlink receivers.

In accordance with fourth embodiments, there is provided apparatus for use in mitigating interference in wireless communications of a user equipment comprising a plurality of radio transceivers, the apparatus being adapted to, at a network node:
receive, from the user equipment via a radio network, an indication of at least one preferred carrier band for at least one of the plurality of radio transceivers, the indication having been received in response to a determination by the user equipment that wireless communication using a given combination of uplink and/or downlink carrier bands associated with the plurality of radio transceivers causes an interference scenario, characterised in that:
   the indication comprises an indication of at least one preferred uplink carrier band for at least one of said plurality of radio transceivers,
   the plurality comprises at least one uplink transmitter and at least two downlink receivers, and
   the indication comprises an indication of at least one preferred uplink carrier band for said at least one uplink transmitter for use during downlink carrier aggregation via said at least two downlink receivers.

In accordance with fifth embodiments, there is provided computer software adapted to perform the method of the first embodiments.

In accordance with sixth embodiments, there is provided a computer program product comprising a computer-readable storage medium having computer readable instructions stored thereon, the computer readable instructions being executable by a computerized device to cause the computerized device to perform the method of the first embodiments. In embodiments, the computer-readable storage medium comprises a non-transitory computer-readable storage medium.

In accordance with seventh embodiments, there is provided computer software adapted to perform the method of the third embodiments.

In accordance with eighth embodiments, there is provided a computer program product comprising a computer-readable storage medium having computer readable instructions stored thereon, the computer readable instructions being executable by a computerized device to cause the computerized device to perform the method of the third embodiments. In embodiments, the computer-readable storage medium comprises a non-transitory computer-readable storage medium.

Further features and advantages of embodiments will become apparent from the following description of preferred embodiments, given by way of example only, which is made with reference to the accompanying drawings.

### Brief Description of the Drawings

Figure 1 summarises current inter-band CA combinations according to active 3GPP work items for working group RAN4 according to the prior art;
Figure 2 depicts third order harmonic intermodulation distortion produced during CA of band 17 with band 4 according to the prior art;
Figure 3, upper part, depicts an inter-RAT combination where third order harmonic intermodulation distortion is produced in a non 3GPP 2.4-GHz ISM band during CA of band 5 and band 3 according to the prior art;
Figure 3, lower part, depicts an inter-RAT combination where third order harmonic distortion is produced in a non 3GPP 5-GHz WLAN band during CA of band 5 and band 3 according to the prior art;
Figure 4 depicts third order intermodulation distortion generated on a DL band due to use of two UL bands according to the prior art;
Figure 5 depicts different levels of third order intermodulation distortion produced during carrier aggregation of band 17 with band 4 according to embodiments;

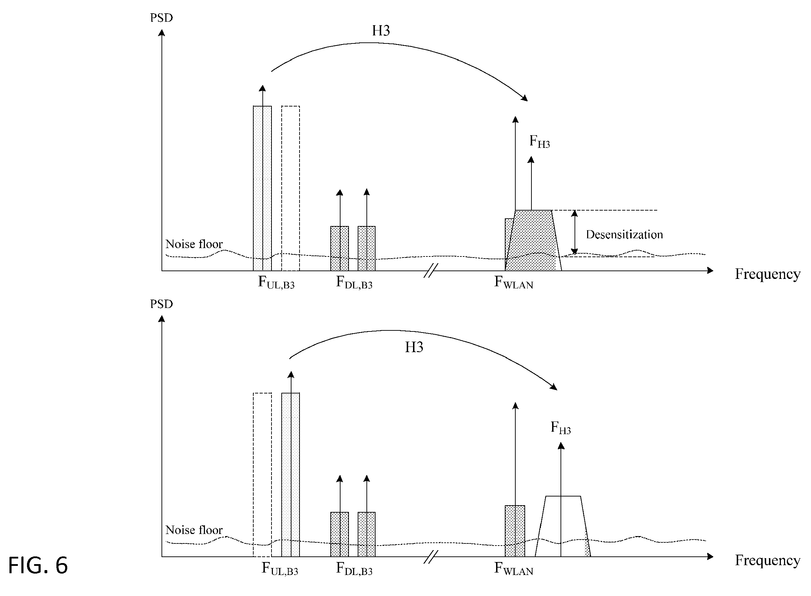

Figure 6, upper part, depicts third order harmonic intermodulation distortion being produced in a WLAN band during non-contiguous intra-band CA of band 3 according to the prior art;
Figure 6, lower part, depicts avoidance of third order harmonic intermodulation distortion in a WLAN band during non-contiguous intra-band CA of band 3 according to embodiments;

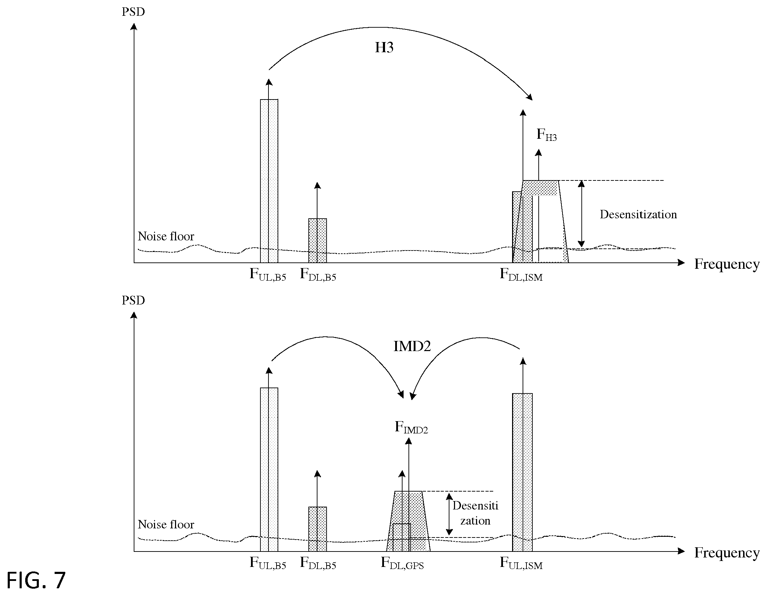

Figure 7, upper part, depicts third order harmonic intermodulation distortion being produced in an ISM band during use of band 5 according to embodiments;
Figure 7, lower part, depicts second order harmonic intermodulation distortion being produced in a GPS band during use of band 5 and an ISM band according to embodiments;

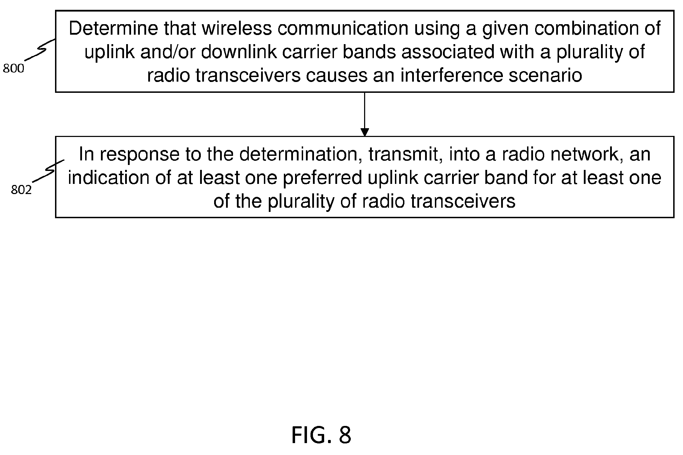

Figure 8 shows a flowchart according to embodiments of the present disclosure;

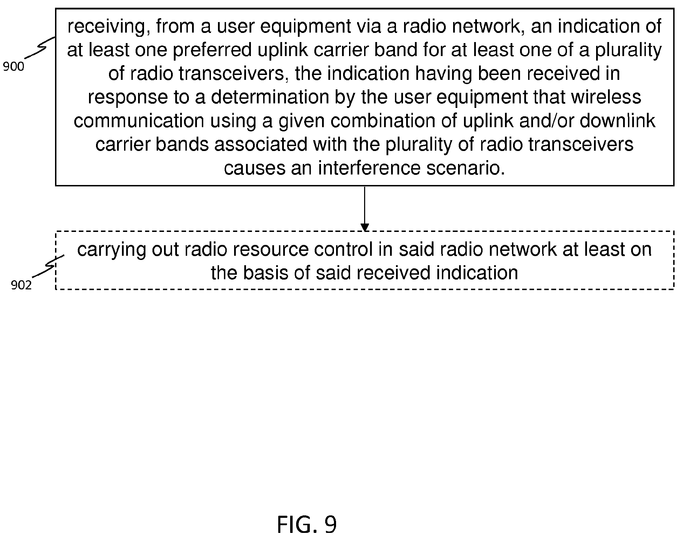

Figure 9 shows a flowchart according to embodiments of the present disclosure; and

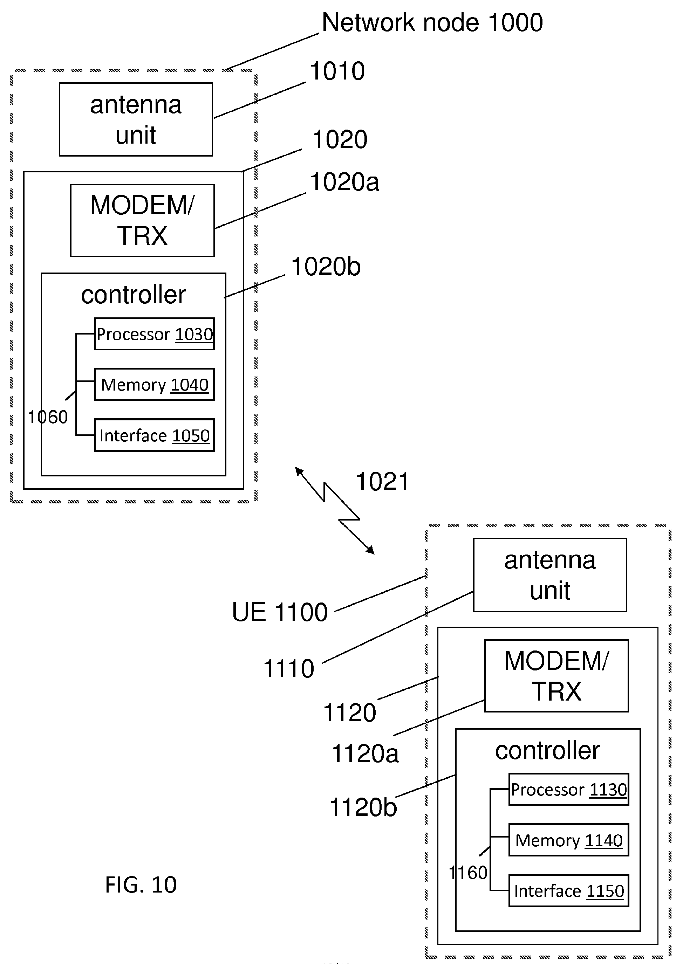

Figure 10 shows a functional block diagram of apparatus according to embodiments of the present disclosure.

### Detailed Description

Embodiments of the present disclosure are for example applicable to multi-band HSDPA and LTE operation, carrier aggregation, and multi-RAT wireless communications. Two or more radio transceivers operating concurrently may cause interference problems for the reception of some downlink or downlinks, or received signals from a broadcast system such as GPS. Embodiments of the present disclosure introduce measures to improve UE overall performance across challenging scenarios. Embodiments of the present disclosure are efficient with multi-band HSDPA and/or LTE CA with a single active cellular UL.

In carrier aggregation, there is additional freedom compared with single carrier configurations. This is especially true for 2DL/1UL carrier aggregation, since the uplink carrier could be paired with either of the downlink frequencies, for example by swapping which cell is the PCell. Since the UE is best aware of its capabilities (for example according to characteristics such as linearity, sensitivity, selectivity, blocking immunity, RF filter performance, spurious response rejection, etc.), activity at antenna ports (for example power of different ULs, received signal strengths) and/or the particular use case (for example expected data load at different radios), it is possible to predict what would be the best cellular link(s) to use at a certain time to optimize the overall data load the UE can handle. Alternatively, power consumption could be decreased if challenging co-existence scenarios are to be avoided and maximum linearity is not specifically required.

Spurious response rejection referred to in the preceding paragraph is typically defined as the capability of the receiver to discriminate between the wanted modulated signal at the nominal frequency and an unwanted signal at any other frequency at which a response is obtained.

Embodiments of the present disclosure introduce a UE capability or event to inform a network node in the radio network, such as a basestation, eNB, access node or suchlike, of a band and/or CC configuration which would cause less performance limitation over some or all active radios within the UE. Thus, embodiments provide improvement of the overall data speed, capability, power consumption and/or user experience for a UE.

Embodiments assist in mitigating interference scenarios involving in-device problems, (i.e. problems within the UE), which the network node cannot determine itself without the assistance of the UE.

As mentioned above, in a CA case of B4+B17, the B17 UL causes 3rd order harmonic distortion over the B4 DL thus desensitizing the B4 receiver if it is operating close to the sensitivity level. Therefore, according to embodiments, depending on the received signal strength on B4 DL, the UE indicates which of the ULs (B17 or B4) is more optimal for its current use to the network. Hence, in embodiments, UL operation on B17 is allowed in favourable conditions and the UL activity is not limited to B4 only (poorer coverage due to much higher carrier frequency). An example of such embodiments is depicted in Figure 5.

In the upper scenario illustrated in Figure 5, the received B4 DL signal quality is good enough such that transmission on UL B 17 is tolerated.

In the middle scenario illustrated in Figure 5, the B4 DL received signal strength is much lower than in the first situation, thus the 3rd order harmonic of the B17 UL causes severe desensitization on the B4 receiver. Such a scenario could have been avoided if the UE had signalled the challenging situation to the network. In embodiments, the UE could signal such a challenging scenario in advance on the basis of forthcoming UL transmission power, received signal strength, harmonic performance, etc.

In the lower scenario illustrated in Figure 5, the UE signals the challenging situation to the network and the network switches UL from B17 to B4 instead. The harmonic content in DL B4 is thus avoided.

It is anticipated that in future will also be other CA band combinations with similar characteristics (for example B3+B8, APAC700+B1, where APAC700 is B28, etc). Furthermore, it is anticipated that there will be large variation between different UEs in actual performance with respect to 3rd order harmonic leakage to the downlink. For instance, US operators tend to have a strong influence on the required performance of the devices they sell in theirs stores with their subscriptions. Thus, it can be anticipated that the performance of those UE's will be good, in many cases clearly better than performance required by 3GPP standards. However, there are also devices in the field that are not sold by US vendors, which are not necessarily designed according to the requirements of US vendors but instead designed to meet 3GPP specifications. Thus the performance of these devices can clearly be different from those sold by the US vendors, hence leading to a different trade-off between desensitization and power consumption, for example (3rd order harmonics desensitize high-band DL). Thus, devices with good performance can more probably operate even with low-band UL (e.g. lower than 1.5GHz), but devices with poorer performance can operate only with high-band UL (e.g. higher than 1.5GHz) in order not to desense the high-band DL too much. Thus, it is highly beneficial to have measures according to embodiments for the UE to "suggest" to a network node such as an eNB a preferred UL to use.

Embodiments involve measures, including methods, apparatus, computer software and computer program products, for mitigating interference in wireless communications of a UE comprising a plurality of radio transceivers.

The UE determines that wireless communication using a given combination of uplink and/or downlink carrier bands associated with the plurality of radio transceivers causes an interference scenario. In response to the determination, the UE transmits, into a radio network, an indication of at least one preferred uplink carrier band for at least one of the plurality of radio transceivers.

The indication transmitted by the UE is received at a network node in the radio network, for example a base station, eNB, access node or suchlike.

In embodiments, the network node carries out radio resource control in the radio network at least on the basis of the received indication.

In embodiments, the indication of the at least one preferred uplink carrier band comprises an indication of at least one preferred uplink carrier band for carrier aggregation. In such embodiments, the network node may initiate configuration of carrier aggregation in the radio network for the UE on the basis of the received indication of at least one preferred uplink carrier band.

In embodiments, the indication of the at least one preferred uplink carrier band comprises an indication of a preferred uplink carrier band for a change of primary serving cell. In such embodiments, the network node may initiate change of primary serving cell for the user equipment on the basis of the received indication of a preferred uplink carrier band.

In some embodiments, the determination is made by the UE when communication using the given combination is taking place via the UE. In other embodiments, the determination is made by the UE before communication using the given combination takes place via the UE.

In embodiments, the radio network comprises a cellular network and the indication comprises an indication of at least one preferred uplink carrier band for the cellular network.

In embodiments, the plurality of radio transceivers comprises at least one uplink transmitter and at least two downlink receivers and the indication comprises an indication of at least one preferred uplink carrier band for the at least one uplink transmitter for use during downlink carrier aggregation via the at least two downlink receivers. Hence, embodiments apply during 1UL + 2DL operation.

In embodiments, the plurality of radio transceivers comprises at least two uplink transmitters and at least two downlink receivers and the indication comprises an indication of at least one preferred uplink carrier band for one or more of the at least two uplink transmitters for use during downlink carrier aggregation via the at least two downlink receivers and uplink carrier aggregation via the at least two uplink transmitters. Hence, embodiments apply during 2UL + 2DL operation.

In some embodiments, prioritization of CCs is desired. For example, in the case of B3 intra-band non-contiguous CA, the two UL CCs may have significantly different impacts, for example H3, on 5GHz WLAN. As depicted in the upper part of Figure 6, one CC of B3 may produce harmonic distortion in the 5GHz WLAN channel. However, as depicted in the lower part of Figure 6, another CC of B3 may not produce harmonic distortion in the 5GHz WLAN channel. Therefore, in embodiments, it is preferred to prioritize the CC whose H3 does not produce H3 in the 5GHz WLAN channel that the UE uses and the UE indicates such a CC preference to the network accordingly.

In embodiments, the indication further comprises an indication of at least one preferred CC configuration within the at least one preferred uplink carrier band. The at least one preferred CC configuration may for example relate to a preferred CC configuration for intra-band non-contiguous carrier aggregation.

In embodiments, the interference scenario comprises one or more uplink and/or downlink carrier bands producing a harmonic distortion on one or more other uplink and/or downlink carrier bands.

In embodiments, the interference scenario comprises one or more uplink and/or downlink carrier bands producing a desensitisation above a given threshold on one or more other uplink and/or downlink carrier bands.

Embodiments can be applied to cellular-to-cellular systems. However, embodiments also apply to inter-RAT cases as well where an eNB will typically have less control and knowledge on UE capabilities and other RAT activities.

In some embodiments, the interference scenario comprises an inter-radio access technology interference scenario between a given combination of uplink and/or downlink carrier bands associated with two or more different radio access technologies. In such embodiments, at least one of the two or more different radio access technologies comprises a cellular network radio access technology and at least one of the two or more different radio access technologies comprises a non-cellular network radio access technology.

For example, in an example inter-RAT case, the UE could support for example LTE bands 1, 2, 4, 5, 8, 17. Considering a UE operates in a CA case B5+B17 and first at B5 and the user then wants to use 2.4-GHz ISM radio as well. It is possible that B5 UL causes 3rd harmonic distortion in the 2.4-GHz frequency area as shown in the upper part of Figure 7. Additionally, concurrently operating B5 and 2.4-GHz ISM radios can cause intermodulation on a 1.575-GHz GPS receiver, as shown in the lower part of Figure 7. In such a case, according to embodiments, the UE transmits a request to a network node such as an eNB to switch to another supported UL cellular band, for example B17, in order to avoid potential in-device coexistence problems.

In a CA case of B5+B3 as shown in Figure 3, the co-existence and potential desensitization of 2.4-GHz ISM and 5-GHz WLAN receivers could be avoided if active cellular UL was chosen appropriately according to embodiments. Also, as mentioned above, concurrently operating B7 UL and 2.4-GHz ISM radios can cause desensitization on the B7 DL. Therefore, CA cases where B7 is aggregated (for example B1+B7, B2+B7, B3+B7, B4+B7 and B20+B7) can benefit from embodiments of the present disclosure.

In other embodiments, the interference scenario comprises an intra-radio access technology interference scenario between a given combination of uplink and/or downlink carrier bands associated with a single radio access technology.

Embodiments comprising carrying out the transmission of the indication from the UE into the radio network and reception of the indication by the network node as part of a capability signalling process for the UE.

In embodiments, the UE carries out the determination at least on the basis of one or more communication capability characteristics of the user equipment. The user equipment capability characteristics may for example be associated with one or more of linearity, sensitivity, radio frequency filter performance, and spurious rejection.

In embodiments, the UE carries out the determination at least on the basis of one or more of uplink transmit power of one or more uplink carriers, received signal strength of one or more downlink carriers, harmonic performance of one or more uplink and/or downlink carrier bands, carrier frequencies employed within one or more uplink and/or downlink carrier bands, and expected data load of one or more uplink and/or downlink carrier bands.

In embodiments, a preferred UL is signalled by a UE to the NW in a static manner, for example as part of UE capability signalling.

In embodiments, a preferred UL is signalled by a UE to the NW dynamically, so that UE knowledge of certain data is used to determine a preferred uplink carrier band. In dynamic embodiments, a preferred uplink carrier band can change as and when certain data changes. In dynamic embodiments, considering for example a B4+B17 example case, one or more of received signal strength on B4, transmission power on B17 and/or the exact carrier frequencies used within each band can be used to dynamically determine whether there would be a preferred band on which to transmit the single carrier uplink.

According to embodiments of the present disclosure, transmission mode control (i.e. a decision as to whether to conduct a partial denial procedure or not) at the communication element (device/terminal) may comprise hysteresis management functionality which is configured to avoid excessive hysteresis between the transmission modes (with or without partial deactivation). In such hysteresis management, the communication element may base its decision for the applicability of mode switching e.g. on network conditions, any available output power restriction value or values, battery capacity, whether there is a connection to a power supply, which applications/services are active, movement of the device, CA band combination, TX resources, RX resources, or the like.

Other criteria used by the UE to determine its preferred uplink band could depend on whether any non-cellular wireless communication systems are operating, and the respective desensitization which could be tolerated on these systems. Such non-cellular wireless communication systems may comprise satellite-based positioning systems such as GPS, GloNASS, Galileo, Beidou, SBAS, and QZSS, aGPS or any other satellite-based positioning system receiver. Such non-cellular wireless communication systems may comprise non-satellite-based positioning systems such as Bluetooth, WLAN, ZigBee, UWB, RFID, ISM radio, etc.

In embodiments, the determination comprises the UE determining an operational status of a non-cellular wireless communication system transceiver in the plurality of radio transceivers.

In embodiments, the determination comprises the UE determining a given desensitisation level which can be tolerated during active operation of a non-cellular wireless communication system transceiver in the plurality of radio transceivers.

In embodiments, the eNB is not mandated to follow the indicated UE preferred uplink. However, assuming that the eNB is able to follow the UE preference indicated to it be a UE, the eNB may for example configure carrier aggregation for the UE with the preferred uplink that the UE has indicated (as per a static configuration case), or perform a PCell swap when the UE reports that it would prefer a new uplink (as per a dynamic reconfiguration case).

In embodiments, an eNB handles multiple UEs which are indicating a preference for a certain uplink band. In such embodiments, the UE can indicate the importance of the request for use of a preferred UL. The eNB can therefore preferentially follow preferred UL requests with higher importance over those with lower importance.

In embodiments, the indication further comprises a priority level associated with the indication. The priority level may for example comprise one of a number of predefined priority levels.

In embodiments, the in-device interference impact from not changing the uplink CC to the preferred UL signalled to the NW by the UE can be categorized by the UE into one a number of different states, for example {none, minor, medium, severe}. In embodiments, the severity of the in-device coexistence problem which would occur if the eNB chooses not to or is unable to follow the UE preference may be categorized by the UE for example as one of {none, minor, medium or severe}. By indicating both the preferred uplink band and the severity of the issue(s) if it is not followed, the eNB can prioritize the various requests. In embodiments, the eNB processes severe requests as per the preferred requested UL, whereas UE minor requests are kept on their current uplink and/or on non-preferred bands due to load balancing constraints.

In embodiments, the UE deduces a measure of severity of in-device coexistence interference associated with the interference scenario and inserts the deduces measure of in-device coexistence interference severity into the indication transmitted from the UE to the network node. In some embodiments, deducing a measure of severity of in-device coexistence interference associated with the interference scenario comprises calculating a measure of severity of in-device coexistence interference associated with the interference scenario. In other embodiments, measures of severity of in-device coexistence interference associated with one or more different interference scenarios are hard-coded into a memory store of the UE and deducing a measure of severity of in-device coexistence interference associated with an interference scenario comprises retrieving a measure of severity of in-device coexistence interference from such memory store.

In embodiments, the UE categorises the calculated measure of in-device coexistence interference severity into one of a number of predefined in-device coexistence interference severity levels and inserts an identifier for the categorised predefined in-device coexistence interference severity level into the indication transmitted from the UE to the network node.

In embodiments, characterization of the severity of the interference scenario is handled by an eNB pre-configuration of the reporting. In embodiments, the eNB configures the UE only to report a change to a preferred uplink if the severity of the interference scenario exceeds a certain threshold.

In embodiments, the UE only carries out transmittal of the indication to the network node if the measure of in-device coexistence interference severity reaches a predetermined threshold level. In embodiments, if the measure of in-device coexistence interference severity does not reach a predetermined threshold level, transmittal of the indication does not take place.

Embodiments comprise the network node transmitting a configuration message to the UE. The configuration message is operable to configure a predetermined threshold level of in-device coexistence interference severity in the user equipment at which transmittal of the indication should take place. In embodiments, upon receipt of the configuration message from the network node, the UE configures the predetermined threshold level identified in the configuration message. Should the configured predetermined threshold level of in-device coexistence interference severity not be met, then the UE will not transmit an indication of at least one preferred uplink carrier band for at least one of the plurality of radio transceivers to the network node.

In embodiments, characterization of the severity of the interference scenario is defined in terms of a CQI impact, at least for cases where the victim carrier is an LTE carrier.

In embodiments, the UE calculates a measure of channel quality degradation associated with the interference scenario and inserts the calculated measure of channel quality degradation into the indication transmitted from the UE to the network node. The calculated measure of channel quality degradation may for example comprise a CQI measure.

In embodiments, a UE indicates (especially for 3GPP systems) in a quantitative way an estimate of the impact of the in-device coexistence problem, such as for CA B4+B17 indicating the CQI degradation to B4 reception, if the UL is transmitted on B 17.

In an example static signalling embodiment, a UE indicates for each supported 2DL CA band combination what its preferred UL band would be. When the network configures a connection with CA, it can choose to take into account the UL preference indicated to it by the UE. In embodiments, the UE indicates whether it has a preference towards a lower or a higher frequency CC within a carrier band.

In an example dynamic signalling embodiment, preferred UL band signalling is transmitted when an in-device interference scenario is detected by the UE as starting to occur. In embodiments, preferred uplink band signalling is transmitted when the severity of the interference scenario changes. In embodiments, the UE provides an indication of the severity of the in-device coexistence interference scenario to the network.

In some static signalling embodiments, a UE indicates a preferred UL CC for each supported intra-band non-contiguous CA band. When the network configures a connection with CA for that UE, it may choose to take into account the UE UL CC preference indicated to it.

In some dynamic signalling embodiments, preferred UL CC signalling is transmitted when an in-device interference scenario is detected by the UE as starting to occur. In embodiments, preferred UL CC signalling is transmitted when the severity of the interference scenario changes. In embodiments, UE signalling includes information relating to a preferred CC in the case of intra-band non-contiguous CA. In embodiments, the UE provides an indication of the severity of the in-device coexistence interference scenario to the network.

In embodiments, the indication is transmitted from the UE and received by the network node in the form of an RRC message.

In embodiments, indication of a preferred UL by a UE is implemented by defining a new RRC message, for example a new RRC message requesting physical channel reconfiguration. An example of such as new RRC message is given as follows:

```
 -- ASN1START
 RRCPhysicalReconfigurationRequest ::= SEQUENCE {
       criticalExtensions CHOICE {
              rrcReconfigurationRequest-r11 RRCReconfigurationRequest-
              r11-IEs,
              criticalExtensionsFuture SEQUENCE {}
       }
       }
       RRCReconfigurationRequest-r11-IEs ::= SEQUENCE {
       PreferredULBand PreferredULBand,
       Severity Severity
       }
       PreferredULBAND ::= INTEGER (1..64)
       EstCQIDegradation ::= INTEGER {
                                                         (0..15)}
                                                         -- ASN1STOP
```

Figure 8 shows a flowchart according to embodiments of the present disclosure. Figure 8 depicts steps carried out at a user equipment for mitigating interference in wireless communications of the user equipment comprising a plurality of radio transceivers.

Item 800 involves determining that wireless communication using a given combination of uplink and/or downlink carrier bands associated with the plurality of radio transceivers causes an interference scenario.

Item 802 involves, in response to the determination, transmitting, into a radio network, an indication of at least one preferred uplink carrier band for at least one of the plurality of radio transceivers.

Figure 9 shows a flowchart according to embodiments of the present disclosure. Figure 9 depicts steps carried out at a network node for mitigating interference in wireless communications of a user equipment comprising a plurality of radio transceivers.

Item 900 involves receiving, from the user equipment via a radio network, an indication of at least one preferred uplink carrier band for at least one of the plurality of radio transceivers, the indication having been received in response to a determination by the user equipment that wireless communication using a given combination of uplink and/or downlink carrier bands associated with the plurality of radio transceivers causes an interference scenario.

Item 902 involves an optional step (hence dashed line box instead of solid line box) where the network node may carry out radio resource control in the radio network at least on the basis of received indication.

Figure 10 shows a functional block diagram of apparatus according to embodiments of the present disclosure. Figure 10 illustrates various electronic devices and apparatus that are suitable for use in a radio (or 'wireless communications') network according to embodiments.

Figure 10 includes a network node (or 'network entity', or 'network device') apparatus 1000 adapted for communication over wireless link 1021 with an apparatus 1100 such as a mobile terminal or termed more generally as a UE.

Network entity 1000 may comprise one or more of a base station, a base transceiver station, a node B (UMTS), an e-NodeB/eNB (LTE), or an access node, etc.

Network entity 1000 may be further communicatively coupled via a link (not shown) to one or more higher network nodes (not shown), for example including a radio network controller (RNC) in the case of the UMTS system or a mobility management entity/serving gateway MME/S-GW in the case of the LTE system.

As shown in Figure 10, UE apparatus 1100 according to embodiments of the present disclosure comprises one or more antenna units 1110 and processing units 1120. The processing unit 1120 comprises a plurality of modems/transceivers 1120a and controller units 1120b.

Antenna unit 1110 comprises one or more RX and/or TX antennas (not shown). An antenna unit is for example applicable for use as or in an antenna module or an antenna module with electronics according to embodiments of the present disclosure.

A controller unit 1120b is configured for use in interference mitigation according to embodiments of the present disclosure, as described above. Component 1120a may be realized by a feeding/communication unit which may comprise at least one of a modem and a transceiver unit (in the case of a transmit/receive antenna or corresponding usage). Component 1120b may be realized by a processing system or processor or, as illustrated, by an arrangement of a processor 1130, a memory 1140 and an interface 1150, which are connected by a link or bus 1160. Memory 1140 may store respective programs assumed to include program instructions or computer program code that, when executed by the processor 1130, enable the respective electronic device or apparatus to operate in accordance with the embodiments of the present disclosure. For example, memory 1140 may store a computer-readable implementation of an interference mitigation procedure. Further, memory 1140 may store one or more look-up tables for implementing interference mitigation with respect to the one or more parameters used in this regard, such as look-up tables for different combinations of conceivable parameters for determination of interference scenarios.

Embodiments of the present disclosure may be implemented at least in part by computer software stored in memory 1140 which is executable by processor 1130; or by a processing system; or by hardware, or by a combination of tangibly stored software and hardware (and tangibly stored firmware).

According to embodiments of the present disclosure, all (or some) circuitries required for the aforementioned functionalities may be embedded in the same circuitry, a system in package, a system on chip, a module, a LTCC (Low temperature co-fired ceramic) or the like, as indicated by the dashed line of UE 1100 in Figure 10.

Irrespective of the illustration of Figure 10, an apparatus (or electronic device) according to embodiments of the present disclosure may comprise processing unit 1120 only, which is connectable to the antenna unit 1110, or an apparatus (or electronic device) according to embodiments of the present disclosure may comprise controlling unit 1120b only, which is connectable to antenna unit 1110 (via modem/transceiver 1120a or not).

According to embodiments of the present disclosure, interference mitigation procedures may be executed in/by a processing unit 1120 (i.e. in cooperation between a modem/transceiver 1120a and a controller 1120b) or in/by a controller 1120b as such.

As shown in Figure 10, network entity apparatus 1000 according to embodiments of the present disclosure comprises one or more antenna units 1010 and processing units 1020, wherein a processing unit 1020 comprises one or more modems/transceivers 1020a and controllers 1020b.

An antenna unit 1010 comprises one or more RX and/or TX antennas (not shown). The antenna unit is for example applicable for use as or in an antenna module or an antenna module with electronics according to embodiments of the present disclosure.

A controlling unit 1020b is configured to perform interference mitigation according to embodiments of the present disclosure, as described above. Component 1020a may be realized by a feeding/communication unit which may comprise at least one of a modem and a transceiver unit (in the case of a transmit/receive antenna or corresponding usage). Component 1020b may be realized by a processing system or processor or, as illustrated, by an arrangement of a processor 1030, a memory 1040 and an interface 1050, which are connected by a link or bus 1060. Memory 1040 may store respective programs assumed to include program instructions or computer program code that, when executed by the processor 1030, enable the respective electronic device or apparatus to operate in accordance with the embodiments of the present disclosure. For example, memory 1040 may store a computer-readable implementation of interference mitigation procedures. Further, memory 1040 may store one or more look-up tables for implementing interference mitigation procedures with respect to the one or more parameters used in this regard.

Embodiments of the present disclosure may be implemented at least in part by computer software stored in memory 1040 which is executable by processor 1030; or by a processing system; or by hardware, or by a combination of tangibly stored software and hardware (and tangibly stored firmware).

According to embodiments of the present disclosure, all (or some) circuitries required for the aforementioned functionalities may be embedded in the same circuitry, a system in package, a system on chip, a module, a LTCC (Low temperature co-fired ceramic) or the like, as indicated by the dashed line of network entity 1000 in Figure 10.

Irrespective of the illustration of Figure 10, network node apparatus 1000 (or electronic device) according to embodiments of the present disclosure may comprise processing unit 1020 only, which is connectable to the antenna unit 1010, or an apparatus (or electronic device) according to embodiments of the present disclosure may comprise controlling unit 1020b only, which is connectable to antenna unit 1010 (via modem/transceiver 1020a or not).

According to embodiments of the present disclosure, interference mitigation procedures may be executed in/by a processing unit 1020 (i.e. in cooperation between a modem/transceiver 1020a and a controller 1020b) or in/by a controller 1020b as such.

In embodiments, the network node comprises a base station, eNB or any other access point of a communication system.

Electronic devices implementing embodiments need not be the entire UE 1100, or network node 1000, but embodiments may be implemented by one or more components of same such as the above described tangibly stored software, hardware, firmware, or a system-on-a-chip SOC or an application specific integrated circuit ASIC or a digital signal processor DSP or a modem or a subscriber identity module (such as a SIM card).

Various embodiments of UE 1100 may include, but are not limited to: mobile (or 'cellular') telephones (including so-called "smart phones"), data cards, USB dongles, personal portable digital devices having wireless communication capabilities including but not limited to laptop/palmtop/tablet computers, digital cameras and music devices, sensor network components and Internet appliances. User equipment 100 may also be referred to as a user terminal or endpoint device.

Various embodiments of memories 1040, 1140 include any data storage technology type which is suitable for the local technical environment, including but not limited to semiconductor based memory devices, magnetic memory devices and systems, optical memory devices and systems, fixed memory, removable memory, disc memory, flash memory, DRAM, SRAM, EEPROM and the like. Various embodiments of processors 1030, 1130 include but are not limited to microprocessors, digital signal processors (DSPs), multi-core processors, general purpose computers, and special purpose computers.

It will be understood that any of processors 1030, 1130 or processing system or circuitry referred to herein may in practice be provided by a single chip or integrated circuit or plural chips or integrated circuits, optionally provided as a chipset, an application-specific integrated circuit (ASIC), field-programmable gate array (FPGA), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with embodiments. In this regard, embodiments may be implemented at least in part by computer software stored in (non-transitory) memory and executable by the processor, or by hardware, or by a combination of tangibly stored software and hardware (and tangibly stored firmware).

Although at least some aspects of the embodiments described herein with reference to the drawings comprise computer processes performed in processing systems or processors, embodiments also extend to computer software, computer programs, particularly computer programs on or in a carrier, adapted for putting embodiments into practice. The program may be in the form of non-transitory source code, object code, a code intermediate source and object code such as in partially compiled form, or in any other non-transitory form suitable for use in the implementation of processes according to embodiments. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The above embodiments are to be understood as illustrative examples of the present disclosure. Further embodiments are envisaged.

In some embodiments, measures/metrics associated with use or non-use of one or more preferred uplinks are measured, categorised and/or calculated by the UE. In other embodiments, such measures/metrics could be stored in a table in memory 1140 of the UE; in such embodiments, instead of the UE measuring and/or categorising and/or calculating such, the UE can retrieve such from memory storage 1140 accordingly.

Embodiments comprise a method for use in mitigating interference in wireless communications of a user equipment comprising a plurality of radio transceivers, the method comprising, at the user equipment:
determining that wireless communication using a given combination of uplink and/or downlink carrier bands associated with the plurality of radio transceivers causes an interference scenario; and
in response to the determination, transmitting, into a radio network, an indication of at least one preferred downlink carrier band for at least one of the plurality of radio transceivers. Hence, a preferred downlink carrier band can be signalled from the UE to the network node for use in interference mitigation.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of embodiments, which is defined in the accompanying claims.

### List of acronyms and abbreviations:

- 3GPP: 3^{rd} Generation Partnership Project
- aGPS: assisted global positioning system
- A-MPR: additional maximum power reduction
- APAC: asian pacific american caucus
- ASIC: application specific integrated circuit
- BW: bandwidth
- CA: carrier aggregation
- CC: component carrier
- CQI: channel quality indicator
- DB: dual-band
- DC: dual-carrier
- DL: downlink
- DRAM: dynamic random-access memory
- DRX: discontinuous reception
- DSP: digital signal processor
- eNB: evolved node-B
- EEPROM: electrically erasable programmable read-only memory
- E-UTRA: evolved universal terrestrial radio access
- FDD: frequency division duplex
- FE: front-end
- FPGA: field programmable gate array
- GloNASS: global navigation satellite system
- GNSS: global navigation satellite system
- GPS: global positioning system
- H3: 3^{rd} order harmonic distortion
- HSDPA: high speed downlink packet access
- IDC: in-device co-existence
- IF: intermediate frequency
- IMD: intermodulation distortion
- ISM: industrial, scientific, and medical
- LO: local oscillator
- LTCC: Low temperature co-fired ceramic
- LTE(-A): long term evolution (advanced)
- MAC: medium access control
- MME: Mobile Management Entity
- NS: network signalling
- NW: network
- Pcell: primary serving cell
- PSD: power spectral density
- QZSS: quasi-zenith satellite system
- RAT: radio access technology
- RF: radio frequency
- RFIC: radio frequency integrated circuit
- RFID: radio-frequency identification
- RNC: radio network controller
- RRC: radio resource control
- RX: receiver
- SBAS: satellite-based augmentation system
- S-GW: serving gateway
- SIM: subscriber identity module
- SNDR: signal-to-noise and distortion ratio
- SOC: system-on-a-chip
- SRAM: static random-access memory
- SSD: solid-state drive
- SW: software
- TX: transmitter
- UE: user equipment
- UL: uplink
- USB: universal serial bus
- UWB: ultra-wide band
- WiFi: wireless fidelity
- WLAN: wireless local area network

## Claims

1. A method of mitigating interference in wireless communications of a user equipment comprising a plurality of radio transceivers, the method comprising, at the user equipment:
determining that wireless communication using a given combination of uplink and/or downlink carrier bands associated with said plurality of radio transceivers causes an interference scenario; and
in response to said determination, transmitting, into a radio network, an indication of at least one preferred carrier band for at least one of said plurality of radio transceivers, **characterised in that**:
the indication comprises an indication of at least one preferred uplink carrier band for at least one of said plurality of radio transceivers,
the plurality comprises at least one uplink transmitter and at least two downlink receivers, and
the indication comprises an indication of at least one preferred uplink carrier band for said at least one uplink transmitter for use during downlink carrier aggregation via said at least two downlink receivers.

2. A method according to claim 1, wherein said plurality comprises at least two uplink transmitters and at least two downlink receivers and said indication comprises an indication of at least one preferred uplink carrier band for one or more of said at least two uplink transmitters for use during downlink carrier aggregation via said at least two downlink receivers and uplink carrier aggregation via said at least two uplink transmitters.

3. A method according to claim 1 or 2, wherein said indication further comprises an indication of at least one preferred component carrier configuration within said at least one preferred uplink carrier band.

4. A method according to claim 3, wherein said at least one preferred component carrier configuration relates to a preferred component carrier configuration for intra-band non-contiguous carrier aggregation.

5. A method according to any preceding claim, wherein said indication further comprises a priority level associated with said indication.

6. A method according to any preceding claim, comprising deducing a measure of severity of in-device coexistence interference associated with said interference scenario,
wherein said indication further comprises said deduced measure of in-device coexistence interference severity.

7. A method according to claim 6, comprising categorising said deduced measure of in-device coexistence interference severity into one of a number of predefined in-device coexistence interference severity levels,
wherein said indication comprises an identifier for said categorised predefined in-device coexistence interference severity level.

8. A method according to any preceding claim, comprising calculating a measure of channel quality degradation associated with said interference scenario,
wherein said indication further comprises said calculated measure of channel quality degradation.

9. A method according to any preceding claim, wherein said indication of said at least one preferred uplink carrier band comprises an indication of a preferred uplink carrier band for carrier aggregation, and/or
wherein said indication of said at least one preferred uplink carrier band comprises an indication of a preferred uplink carrier band for a change of primary serving cell.

10. A method according to any preceding claim, wherein said interference scenario comprises one or more uplink and/or downlink carrier bands producing a harmonic distortion on one or more other uplink and/or downlink carrier bands, and/or
wherein said interference scenario comprises one or more uplink and/or downlink carrier bands producing a desensitisation above a given threshold on one or more other uplink and/or downlink carrier bands.

11. Apparatus for use in mitigating interference in wireless communications of a user equipment comprising a plurality of radio transceivers, the apparatus being adapted to, at the user equipment:
determine that wireless communication using a given combination of uplink and/or downlink carrier bands associated with said plurality of radio transceivers causes an interference scenario; and
in response to said determination, transmit, into a radio network, an indication of at least one preferred carrier band for at least one of said plurality of radio transceivers, **characterised in that**:
the indication comprises an indication of at least one preferred uplink carrier band for at least one of said plurality of radio transceivers,
the plurality comprises at least one uplink transmitter and at least two downlink receivers, and
the indication comprises an indication of at least one preferred uplink carrier band for said at least one uplink transmitter for use during downlink carrier aggregation via said at least two downlink receivers.

12. A method of mitigating interference in wireless communications of a user equipment comprising a plurality of radio transceivers, the method comprising, at a network node:
receiving, from the user equipment via a radio network, an indication of at least one preferred carrier band for at least one of said plurality of radio transceivers, said indication having been received in response to a determination by said user equipment that wireless communication using a given combination of uplink and/or downlink carrier bands associated with said plurality of radio transceivers causes an interference scenario, **characterised in that**:
the indication comprises an indication of at least one preferred uplink carrier band for at least one of said plurality of radio transceivers,
the plurality comprises at least one uplink transmitter and at least two downlink receivers, and
the indication comprises an indication of at least one preferred uplink carrier band for said at least one uplink transmitter for use during downlink carrier aggregation via said at least two downlink receivers.

13. Apparatus for use in mitigating interference in wireless communications of a user equipment comprising a plurality of radio transceivers, the apparatus being adapted to, at a network node:
receive, from the user equipment via a radio network, an indication of at least one preferred carrier band for at least one of said plurality of radio transceivers, said indication having been received in response to a determination by said user equipment that wireless communication using a given combination of uplink and/or downlink carrier bands associated with said plurality of radio transceivers causes an interference scenario, **characterised in that**:
the indication comprises an indication of at least one preferred uplink carrier band for at least one of said plurality of radio transceivers,
the plurality comprises at least one uplink transmitter and at least two downlink receivers, and
the indication comprises an indication of at least one preferred uplink carrier band for said at least one uplink transmitter for use during downlink carrier aggregation via said at least two downlink receivers.

14. A computer program product comprising a computer-readable storage medium having computer readable instructions stored thereon, the computer readable instructions being executable by a computerized device to cause the computerized device to perform the method of any of claims 1 to 10 or 12.

## Patentansprüche

1. Verfahren zum Abschwächen von Störungen in drahtlosen Kommunikationen eines Benutzergerätes, das eine Vielzahl von Funktransceivern aufweist, wobei das Verfahren in dem Benutzergerät aufweist:
Bestimmen, dass eine drahtlose Kommunikation, die eine gegebene Kombination von Aufwärts- und/oder Abwärtsverbindungsträgerbändern assoziiert mit der Vielzahl von Funktransceivern verwendet, ein Störungsszenario verursacht; und
als Antwort auf die Bestimmung, Übertragen in ein Funknetzwerk, einer Angabe von wenigstens einem bevorzugten Trägerband für wenigstens einen der Vielzahl der Funktransceiver, dadurch charakterisiert, dass:
die Angabe eine Angabe von wenigstens einer bevorzugten Aufwärtsverbindungsträgerband für wenigstens einen der Vielzahl der Funktransceivern aufweist,
die Vielzahl wenigstens einen Aufwärtsverbindungstransmitter und wenigstens zwei Abwärtsverbindungsreceiver aufweist, und
die Angabe eine Angabe von wenigstens einem bevorzugten Aufwärtsträgerband für den wenigstens einen Aufwärtsverbindungstransmitter zur Verwendung während Abwärtsverbindungsträgeraggregation via der wenigstens zwei Abwärtsverbindungsreceivern aufweist.

2. Verfahren nach Anspruch 1, wobei die Vielzahl wenigstens zwei Aufwärtsverbindungstransmitter und wenigstens zwei Abwärtsverbindungstransmitter aufweist und die Angabe eine Angabe von wenigstens einem bevorzugten Aufwärtsverbindungsträgerband für einen oder mehrere der wenigstens zwei Aufwärtsverbindungstransmitter zur Verwendung während Abwärtsverbindungsträgeraggregation via der wenigstens zwei Abwärtsverbindungsreceiver und Aufwärtsverbindungsträgeraggregation via der wenigstens zwei Aufwärtsverbindungstransmitter aufweist.

3. Verfahren nach Anspruch 1 oder 2, wobei die Angabe weiter eine Angabe von wenigstens einer bevorzugten Komponententrägerkonfiguration innerhalb des wenigstens einen bevorzugten Aufwärtsverbindungsträgerbandes aufweist.

4. Verfahren nach Anspruch 3, wobei die wenigstens eine bevorzugte Komponententrägerkonfiguration in Verbindung steht zu einer bevorzugten Komponententrägerkonfiguration für Intra-band nicht-kontinuierliche Trägeraggregation.

5. Verfahren nach einem der vorherigen Ansprüche, wobei die Angabe weiter ein Prioritätslevel assoziiert mit der Angabe aufweist.

6. Verfahren nach einem der vorherigen Ansprüche, das Deduzieren eines Maßes einer Schwere von einer Vorrichtungs-interne-Koexistenzstörung assoziiert mit dem Störungsszenario aufweist,
wobei die Angabe weiter das deduzierte Maß der Vorrichtungs-interneKoexistenzstörungsschwere aufweist.

7. Verfahren nach Anspruch 6, das Kategorisieren des deduzierten Maßes der Vorrichtungs-internen-Koexistenzstörungsschwere in eins einer Anzahl von vordefinierten Vorrichtungs-internen-Koexistenzstörungsschwereleveln aufweist,
wobei die Angabe einen Bezeichner für das kategorisierte vordefinierte Vorrichtungs-interne-Koexistenzstörungsschwerelevel aufweist.

8. Verfahren nach einem der vorherigen Ansprüche, das Berechnen eines Maßes für Kanalqualitätsverschlechterung assoziiert mit dem Störungsszenario aufweist,
wobei die Angabe weiter das berechnete Maß für die Kanalqualitätsverschlechterung aufweist.

9. Verfahren nach einem der vorherigen Ansprüche, wobei die Angabe des wenigstens einen bevorzugten Aufwärtsverbindungsträgerbandes eine Angabe für ein bevorzugtes Aufwärtsverbindungsträgerband für Trägeraggregation aufweist, und/oder
wobei die Angabe des wenigstens einen bevorzugten Aufwärtsverbindungsträgerbandes eine Angabe für ein bevorzugtes Aufwärtsverbindungsträgerband für eine Änderung einer primären Dienstzelle aufweist.

10. Verfahren nach einem der vorherigen Ansprüche, wobei das Störungsszenario ein oder mehrere Aufwärtsverbindungs- und/oder Abwärtsverbindungsträgerbänder, die eine harmonische Verzerrung auf einem oder mehreren anderen Aufwärtsverbindungsund/oder Abwärtsverbindungsträgerbändern hervorrufen, aufweist und/oder
wobei das Störungsszenario ein oder mehrere Aufwärtsverbindungs- und/oder Abwärtsverbindungsträgerbänder, die eine Desensibilisierung oberhalb eines gegebenen Grenzwertes auf einem oder mehreren anderen Aufwärtsverbindungs- und/oder Abwärtsverbindungsträgerbändern produzieren, aufweist.

11. Vorrichtung zur Verwendung beim Abschwächen von Störungen in drahtlosen Kommunikationen eines Benutzergerätes, die eine Vielzahl von Radiotransceivern aufweist, wobei die Vorrichtung dazu eingerichtet ist, in dem Benutzergerät zu:
Bestimmen, dass eine drahtlose Kommunikation, die eine gegebene Kombination von Aufwärts- und/oder Abwärtsverbindungsträgerbändern assoziiert mit der Vielzahl von Funktransceivern verwendet, ein Störungsszenario verursacht; und
als Antwort auf die Bestimmung, Übertragen in ein Funknetzwerk, einer Angabe von wenigstens einem bevorzugten Trägerband für wenigstens einen der Vielzahl der Funktransceiver, dadurch charakterisiert, dass:
die Angabe eine Angabe von wenigstens einer bevorzugten Aufwärtsverbindungsträgerband für wenigstens einen der Vielzahl der Funktransceivern aufweist,
die Vielzahl wenigstens einen Aufwärtsverbindungstransmitter und wenigstens zwei Abwärtsverbindungsreceiver aufweist, und
die Angabe eine Angabe von wenigstens einem bevorzugten Aufwärtsträgerband für den wenigstens einen Aufwärtsverbindungstransmitter zur Verwendung während Abwärtsverbindungsträgeraggregation via der wenigstens zwei Abwärtsverbindungsreceivern aufweist.

12. Verfahren zum Abschwächen von Störungen in drahtlosen Kommunikationen eines Benutzergerätes, das eine Vielzahl von Radiotransceivern aufweist, wobei das Verfahren in einem Netzwerkknoten aufweist:
Empfangen von dem Benutzergerät via eines Funknetzwerks eine Angabe von wenigstens einem bevorzugten Trägerband für wenigstens einen der Vielzahl der Funktransceiver, wobei die Angabe empfangen wird als Antwort auf eine Bestimmung durch das Benutzergerät, dass eine drahtlose Kommunikation, die eine gegebene Kombination von Aufwärtsverbindungs- und/oder Abwärtsverbindungsträgerbändern assoziiert mit der Vielzahl von Funkreceivern verwendet, ein Störungsszenario verursacht, dadurch charakterisiert, dass:
die Angabe eine Angabe von wenigstens einer bevorzugten Aufwärtsverbindungsträgerband für wenigstens einen der Vielzahl der Funktransceivern aufweist,
die Vielzahl wenigstens einen Aufwärtsverbindungstransmitter und wenigstens zwei Abwärtsverbindungsreceiver aufweist, und
die Angabe eine Angabe von wenigstens einem bevorzugten Aufwärtsträgerband für den wenigstens einen Aufwärtsverbindungstransmitter zur Verwendung während Abwärtsverbindungsträgeraggregation via der wenigstens zwei Abwärtsverbindungsreceivern aufweist.

13. Vorrichtung zur Verwendung zum Abschwächen einer Störung in drahtlosen Kommunikationen eines Benutzergerätes, das eine Vielzahl von Funktransceivern aufweist, wobei die Vorrichtung in einem Netzwerkknoten dazu eingerichtet ist zum:
Empfangen von dem Benutzergerät via eines Funknetzwerks eine Angabe von wenigstens einem bevorzugten Trägerband für wenigstens einen der Vielzahl der Funktransceiver, wobei die Angabe empfangen wird als Antwort auf eine Bestimmung durch das Benutzergerät, dass eine drahtlose Kommunikation, die eine gegebene Kombination von Aufwärtsverbindungs- und/oder Abwärtsverbindungsträgerbändern assoziiert mit der Vielzahl von Funkreceivern verwendet, ein Störungsszenario verursacht, dadurch charakterisiert, dass:
die Angabe eine Angabe von wenigstens einer bevorzugten Aufwärtsverbindungsträgerband für wenigstens einen der Vielzahl der Funktransceivern aufweist,
die Vielzahl wenigstens einen Aufwärtsverbindungstransmitter und wenigstens zwei Abwärtsverbindungsreceiver aufweist, und
die Angabe eine Angabe von wenigstens einem bevorzugten Aufwärtsträgerband für den wenigstens einen Aufwärtsverbindungstransmitter zur Verwendung während Abwärtsverbindungsträgeraggregation via der wenigstens zwei Abwärtsverbindungsreceivern aufweist.

14. Computerprogrammprodukt, das ein computerlesbares Speichermedium mit computerlesbaren Instruktionen, die darauf gespeichert sind, aufweist, wobei die computerlesbaren Instruktionen, die durch eine Computervorrichtung ausführbar sind, um die Computervorrichtung dazu zu veranlassen, das Verfahren nach einem der Ansprüche 1 bis 10 oder 12 auszuführen.

## Revendications

1. Procédé d'atténuation de d'interférences dans des communications sans fil d'un équipement d'utilisateur comprenant une pluralité d'émetteurs-récepteurs radio, le procédé comprenant, au niveau de l'équipement d'utilisateur :
la détermination du fait que la communication sans fil utilisant une combinaison donnée de bandes porteuses de liaison montante et/ou de liaison descendante associée à ladite pluralité d'émetteurs-récepteurs radio provoque un scénario d'interférence ; et
en réponse à ladite détermination, la transmission, dans un réseau radiofréquences, d'une indication d'au moins une bande porteuse préférée pour au moins l'un de ladite pluralité d'émetteurs-récepteurs radio, **caractérisé en ce que** :
l'indication comprend une indication d'au moins une bande porteuse de liaison montante préférée pour au moins l'un de ladite pluralité d'émetteurs-récepteurs radio,
la pluralité comprend au moins un émetteur de liaison montante et au moins deux récepteurs de liaison descendante, et
l'indication comprend une indication d'au moins une bande porteuse de liaison montante préférée pour ledit au moins un émetteur de liaison montante pour l'utilisation au cours d'une agrégation de porteuses de liaison descendante via lesdits au moins deux récepteurs de liaison descendante.

2. Procédé selon la revendication 1, dans lequel ladite pluralité comprend au moins deux émetteurs de liaison montante et au moins deux récepteurs de liaison descendante et ladite indication comprend une indication d'au moins une bande porteuse de liaison montante préférée pour un ou plusieurs desdits au moins deux émetteurs de liaison montante pour l'utilisation au cours de l'agrégation de porteuses de liaison descendante via au moins deux récepteurs de liaison descendante et de l'agrégation de porteuses de liaison montante via lesdits au moins deux émetteurs de liaison montante.

3. Procédé selon la revendication 1 ou 2, dans lequel ladite indication comprend en outre une indication d'au moins une configuration de porteuse de composante préférée à l'intérieur de ladite au moins une bande porteuse de liaison montante préférée.

4. Procédé selon la revendication 3, dans lequel ladite au moins une configuration de porteuse de composante préférée concerne une configuration de porteuse de composante préférée pour une agrégation de porteuses non contiguës intra-bandes.

5. Procédé selon l'une quelconque des revendications précédentes, dans lequel ladite indication comprend en outre un niveau de priorité associé à ladite indication.

6. Procédé selon l'une quelconque des revendications précédentes, comprenant la déduction d'une mesure de gravité des interférences de coexistence dans un dispositif associée audit scénario d'interférence,
dans lequel ladite indication comprend en outre ladite mesure déduite de gravité d'interférences de coexistence dans le dispositif.

7. Procédé selon la revendication 6, comprenant la catégorisation de ladite mesure déduite de gravité d'interférences de coexistence dans le dispositif en l'un d'un nombre de niveaux prédéfinis de gravité des interférences de coexistence dans le dispositif,
dans lequel ladite indication comprend un identifiant pour ledit niveau prédéfini catégorisé de gravité des interférences de coexistence dans le dispositif.

8. Procédé selon l'une quelconque des revendications précédentes, comprenant le calcul d'une mesure de dégradation de la qualité des canaux associée audit scénario d'interférence,
dans lequel ladite indication comprend en outre ladite mesure calculée de dégradation de la qualité des canaux.

9. Procédé selon l'une quelconque des revendications précédentes, dans lequel ladite indication de ladite au moins une bande porteuse de liaison montante préférée comprend une indication d'une bande porteuse de liaison montante préférée pour l'agrégation de porteuses, et/ou
dans lequel ladite indication de ladite au moins une bande porteuse de liaison montante préférée comprend une indication d'une bande porteuse de liaison montante préférée pour un changement de cellule de desserte principale.

10. Procédé selon l'une quelconque des revendications précédentes, dans lequel ledit scénario d'interférence comprend une ou plusieurs bandes porteuses de liaison montante et/ou de liaison descendante produisant une distorsion harmonique sur une ou plusieurs bandes porteuses de liaison montante et/ou de liaison descendante, et/ou
dans lequel ledit scénario d'interférence comprend une ou plusieurs bandes porteuses de liaison montante et/ou de liaison descendante produisant une désensibilisation au-dessus d'un seuil donné sur une ou plusieurs autres bandes porteuses de liaison montante et/ou de liaison descendante.

11. Appareil destiné à être utilisé dans l'atténuation d'interférences dans des communications sans fil d'un équipement d'utilisateur comprenant une pluralité d'émetteurs-récepteurs radio, l'appareil étant adapté, au niveau de l'équipement d'utilisateur, pour :
déterminer que la communication sans fil utilisant une combinaison donnée de bandes porteuses de liaison montante et/ou de liaison descendante associée à ladite pluralité d'émetteurs-récepteurs radio provoque un scénario d'interférence ; et
transmettre, en réponse à ladite détermination, dans un réseau radiofréquences, une indication d'au moins une bande porteuse préférée pour au moins l'un de ladite pluralité d'émetteurs-récepteurs radio, **caractérisé en ce que** :
l'indication comprend une indication d'au moins une bande porteuse de liaison montante préférée pour au moins l'un de ladite pluralité d'émetteurs-récepteurs radio,
la pluralité comprend au moins un émetteur de liaison montante et au moins deux récepteurs de liaison descendante, et
l'indication comprend une indication d'au moins une bande porteuse de liaison montante préférée pour ledit au moins un émetteur de liaison montante pour l'utilisation au cours d'une agrégation de porteuses de liaison descendante via lesdits au moins deux récepteurs de liaison descendante.

12. Procédé d'atténuation d'interférences dans des communications sans fil d'un équipement d'utilisateur comprenant une pluralité d'émetteurs-récepteurs radio, le procédé comprenant, au niveau d'un noeud de réseau :
la réception, depuis l'équipement d'utilisateur via un réseau radiofréquences, d'une indication d'au moins une bande porteuse préférée pour au moins l'un de ladite pluralité d'émetteurs-récepteurs radio, ladite indication ayant été reçue en réponse à une détermination par ledit équipement d'utilisateur que la communication sans fil utilisant une combinaison donnée de bandes porteuses de liaison montante et/ou de liaison descendante associée à ladite pluralité d'émetteurs-récepteurs radio provoque un scénario d'interférence, **caractérisé en ce que** :
l'indication comprend une indication d'au moins une bande porteuse de liaison montante préférée pour au moins l'un de ladite pluralité d'émetteurs-récepteurs radio,
la pluralité comprend au moins un émetteur de liaison montante et au moins deux récepteurs de liaison descendante, et
l'indication comprend une indication d'au moins une bande porteuse de liaison montante préférée pour ledit au moins un émetteur de liaison montante pour utilisation au cours d'une agrégation de porteuses de liaison descendante via lesdits au moins deux récepteurs de liaison descendante.

13. Appareil pour utilisation dans l'atténuation d'interférences dans des communications sans fil d'un équipement d'utilisateur comprenant une pluralité d'émetteurs-récepteurs radio, l'appareil étant adapté, au niveau d'un noeud de réseau, pour :
recevoir, depuis l'équipement d'utilisateur via un réseau radiofréquences, une indication d'au moins une bande porteuse préférée pour au moins l'un de ladite pluralité d'émetteurs-récepteurs radio, ladite indication ayant été reçue en réponse à une détermination par ledit équipement d'utilisateur du fait que la communication sans fil utilisant une combinaison donnée de bandes porteuses de liaison montante et/ou de liaison descendante associée à ladite pluralité d'émetteurs-récepteurs radio provoque un scénario d'interférence, **caractérisé en ce que** :
l'indication comprend une indication d'au moins une bande porteuse de liaison montante préférée pour au moins l'un de ladite pluralité d'émetteurs-récepteurs radio,
la pluralité comprend au moins un émetteur de liaison montante et au moins deux récepteurs de liaison descendante, et
l'indication comprend une indication d'au moins une bande porteuse de liaison montante préférée pour ledit au moins un émetteur de liaison montante pour l'utilisation au cours d'une agrégation de porteuses de liaison descendante via lesdits au moins deux récepteurs de liaison descendante.

14. Produit de programme informatique comprenant un support de stockage lisible par ordinateur comportant des instructions lisibles par ordinateur stockées sur celui-ci, les instructions lisibles par ordinateur étant exécutables par un dispositif informatisé pour amener le dispositif informatisé à réaliser le procédé selon l'une quelconque des revendications 1 à 10 ou 12.
